# EUROPÄISCHE PATENTSCHRIFT

(11) **EP 1 275 556 B1**
(45) Veröffentlichungstag und Bekanntmachung des Hinweises auf die Patenterteilung: **10.12.2008**
(21) Anmeldenummer: 02090228.4
(22) Anmeldetag: 01.07.2002
(51) Int. Cl.: B60Q 1/14

(54) **Vorrichtung zur Reduzierung von Blenderscheinungen eines Kraftfahrzeugführers**
Dazzle reducing device for vehicle driver
Dispositif pour réduire l'éblouissement d'un conducteur de véhicule

(30) Priorität: 13.07.2001 DE 10134770
(43) Veröffentlichungstag der Anmeldung: 15.01.2003
(73) Patentinhaber: Deutsches Zentrum für Luft- und Raumfahrt e.V., 51147 Köln (DE)
(72) Erfinder: Driescher, Hans, Dr., 12559 Berlin (DE); Eckardt, Andreas, 12524 Berlin (DE); Greiner-Bär, Michael, 12524 Berlin (DE)
(74) Vertreter: Zucker, Volker

(56) Entgegenhaltungen:
- EP-A- 0 949 118
- WO-A-00/15462
- DE-A1- 2 001 086
- DE-A1- 2 204 102
- DE-A1- 2 246 414
- DE-A1- 3 101 855
- DE-A1- 4 335 244

## Beschreibung

Die Erfindung betrifft eine Vorrichtung zur Reduzierung von Blenderscheinungen eines Kraftfahrzeugführers gemäß dem Oberbegriff des Patentanspruchs 1.

Durch Blendwirkung im Straßenverkehr während der Dunkelheit geschehen immer wieder schwere Unfälle. Die Ursachen für die Blendwirkung sind häufig die Scheinwerfer des Gegenverkehrs, wobei die Blendwirkung durch äußere Umstände wie nasse Fahrbahn, Nebel oder falsch eingestellte Scheinwerfer noch verstärkt werden können.

Zur Vermeidung der Blendung des Gegenverkehrs und der besseren Fahrbahnausleuchtung sind verschiedene Vorrichtungen bekannt, die den Scheinwerfer anhand von Sensorsignalen dynamisch stets so ausregeln, daß dieser optimal eingestellt ist. Derartige Vorrichtungen sind jedoch relativ aufwendig und lösen darüber hinaus nicht das Grundproblem der Blendung durch die Scheinwerfer des Gegenverkehrs.

Aus der DE 22 04 102 ist eine Einrichtung zur Verhinderung einer Blendung der Fahrer von sich auf demselben Verkehrsweg begegnenden Fahrzeugen bekannt, die Scheinwerfer zur Beleuchtung des vor Ihnen liegenden Teiles des Verkehrsweges haben, bei welcher den Scheinwerfern jeweils eine Lichtveränderungsvorrichtung und den Fahrern jeweils eine entsprechende Lichtauswahlvorrichtung , die im wesentlichen nur Licht von den Scheinwerfern der Fahrzeuge der eigenen Fahrtrichtung, nicht jedoch von den Scheinwerfern der Fahrzeuge der entgegenkommenden Fahrzeuge durchläßt, zugeordnet sind, wobei die Lichtveränderungsvorrichtung die Intensität des Scheinwerferlichtes mit einer vorgegebenen Frequenz und Phase moduliert. Die Lichtauswahlvorrichtung enthält ein gleichphasig mit dem Scheinwerferlicht des Fahrzeuges gesteuertes Lichtventil und eine Synchronvorrichtung, die die Intensität des Scheinwerferlichtes und die Öffnungsperiode der Lichtventile der sich begegnenden Fahrzeuge gegenphasig steuert.

Weiter offenbart diese Druckschrift, daß die Lichtveränderungseinrichtung ein periodisches Ein- und Ausschalten der Scheinwerfer bewirkt, also eine Impulsansteuerung. Beispielhaft werden im Pulsbetrieb arbeitende elektrische Entladungslampen genannt. Die Frequenz der von den Scheinwerfern ausgestrahlten Lichtimpulse soll vorzugsweise oberhalb der Flimmerfrequenz liegen, wobei beispielhaft 50 - 60 Hz angegeben werde.

Aus der DE 2246414 ist eine Vorrichtung zur blendungsfreien Führung eines Fahrzeuges im Verkehr bekannt, bei der vor dem Fahrzeuglenker am oder im Fahrzeug ein zeitlich, die Lichtdurchlässigkeit zum Fahrzeuglenker änderndes Filter vorgesehen ist, bei der das Filter als Schirm ausgebildet ist, der bei Bedarf pulsartig durch ein Steuergerät zwischen nahezu vollständiger und stark reduzierter Lichtleistung gesteuert wird , wobei eine Fotozelle so über das Steuergerät auf das ein Tastverhältnis bildene Verhältnis zwischen der Zeitdauer hoher Lichtdurchlässigkeit und der Zeitdauer fast vollständiger Lichtundurchlässigkeit des Schirmes einwirkt, daß das gesamte von entgegenkommenden Fahrzeugen ausgesandte Licht automatisch in jedem Augenblick auf eine solche Schwelle gedämpft wird, daß bei ausreichender Erkennungsmöglichkeit der Scheinwerfer der entgegenkommenden Fahrzeuge noch keine Blendung des Fahrzeuglenkers eintritt, und daß diese Schwelle von Hand nach Belieben und Augenempfindlichkeit des Fahrzeuglenkers einstellbar ist. Als Lichtquellen werden ebenfalls vorzugsweise Blitzlichtlampen vorgeschlagen. Nachteillig an den bekannten Vorrichtungen ist, daß die vorgeschlagenen Lichtquellen wie Halogenlampen oder Xe-Hochdrucklampen für den Pulsbetrieb ungeeignet sind bzw. nicht eine ausreichende Modulationstiefe aufweisen. Halogenlampen sind für den Pulsbetrieb ungeeignet, da der Kreislauf der abgedampften Wolframpartikel im Halogensystem nur bei gleichmäßiger, sehr hoher Wendeltemperatur funktioniert. Unabhängig davon ist die Lebensdauer der Leuchtquellen mit Metallglühwendeln im Pulsbetrieb sehr kurz, da in der Wiederanlaufphase der Widerstand des Glühfadens viel niedriger als im normalen nicht gepulsten Betrieb ist. Die damit verbundenen ständigen Einschaltstromstöße führen zur relativ schnellen Zerstörung der Glühwendel. Xe-Hochdrucklampen für Kraftfahrzeugscheinwerfer sind für den Gleichlichtbetrieb konzipiert. Bei diesen Lichtquellen baut das Xenongas im Pulszustand einen hohen Innendruck auf. Dadurch wird wiederum durch die Druckverbreiterung der Spektrallinien die spektrale Zusammensetzung des ausgestrahlten Lichts beeinflusst. Xe-Hochdrucklampen können zwar auch gepulst betrieben werden, jedoch ist die Modulationstiefe nur sehr gering, so dass diese nicht geeignet sind. Aus diesen und anderen Gründen sind die vorgeschlagenen Vorrichtungen zur Reduzierung von Blenderscheinungen eines Kraftfahrzeugführers nie zum praktischen Einsatz gekommen.

Aus der WO 00/15 462 A1 ist eine Vorrichtung zur Reduzierung von Blenderscheinungen eines Kraftfahrzeugführers bekannt, umfassend mindestens zwei gepulste Lichtquellen und mindestens ein mit den Lichtquellen synchronisiertes Lichtventil, wobei die Lichtquellen als LED-Array ausgebildet sind und das Lichtventil von einer Ansteuereinrichtung angesteuert wird.

Aus der DE 20 01 086 A1 ist eine Vorrichtung zur blendungsfreien Führung eines Fahrzeugs im Verkehr bekannt, wobei vor dem Fahrzeuglenker am oder im Fahrzeug ein zeitlich die Lichtdurchlässigkeit zum Fahrzeuglenker änderndes Filter vorgesehen ist, wobei das Filter als Schirm ausgebildet ist, der bei Bedarf, pulsartig und gesteuert, zwischen nahezu vollständiger und stark reduzierter Lichtdurchlässigkeit schwankt. Die Scheinwerfer des Fahrzeugs geben synchron mit der Lichtdurchlässigkeit Licht ab, so dass in den Zeitabschnitten, in denen der Schirm lichtdurchlässig ist, die Scheinwerfer Licht abgeben. Das ein Tastverhältnis bildende Verhältnis zwischen der Zeitdauer hoher Lichtdurchlässigkeit und der Zeitdauer fast vollständiger Lichtundurchlässigkeit des Schirmes beträgt 0,1 bis 0,001. Die Veränderung der Frequenz der Lichtdurchlässigkeit des Schirmes, der Zeitdauer, während der die Scheinwerfer Licht abgeben, des Tastverhältnisses und der Amplitude der Lichtdurchlässigkeitskurve und des von den Scheinwerfern abgegebenen Lichts erfolgt durch ein Steuergerät, wobei das Steuergerät mit einer Fotozelle verbunden ist, die das Fremdlicht aufnimmt und dieses nach Intensität und zeitlichem Verlauf in Form elektrischer Signale an das Steuergerät weitergibt. Das Steuergerät wertet die elektrischen Signale aus, so dass bei gepulstem Fremdlicht in dessen Beleuchtungszeit der Schirm lichtundurchlässig ist und die Scheinwerfer nicht leuchten.

Der Erfindung liegt daher das technische Problem zugrunde, eine Vorrichtung zur Reduzierung von Blenderscheinungen eines Kraftfahrzeugführers zu schaffen, die einfach und zuverlässig realisierbar ist.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu sind die gepulsten Lichtquellen als LED- Array ausgebildet. Neben der langen Lebensdauer lassen sich mit LEDs auch extrem kurze Ein- und Ausschaltflanken realisieren. Ein weiterer Vorteil ist die einfache Abführung von elektrischer Verlustleistung und die sehr hohe Modulationstiefe. Aufgrund der einfachen Zusammenhänge zwischen Lichtleistung und Strom lässt sich die Leistung sehr einfach steuern. Des Weiteren sind auch Ausfälle einzelner LEDs unkritisch, so dass die Zuverlässigkeit des Scheinwerfers sehr hoch ist.

Dabei ist einer Ansteuerungseinrichtung für das Lichtventil mindestens eine Fotozelle zugeordnet, wobei die Ansteuereinrichtung das Tastverhältnis zwischen Pulseinzeit und Pulsauszeit in Abhängigkeit der Signale der Fotozelle zu einer konstanten Grundhelligkeit nachregelt. Dadurch wird verhindert, dass der Fahrer seine Umgebung nur noch dunkel wahrnimmt, obwohl keine Gefahr von Blendung besteht. Dabei wird entsprechend einer Verlängerung der Pulseinzeit die Stromstärke der LEDs reduziert, so dass die anderen Verkehrsteilnehmer nicht geblendet werden.

Vorzugsweise ist das Tastverhältnis und/oder die Grundhelligkeit manuell einstellbar, so dass sich jeder Nutzer individuell seine Beleuchtungsverhältnisse auswählen kann, wobei aus Sicherheitsgründen bestimmte Wertebereiche vorgegeben sein können.

Vorzugsweise werden die LEDs mit einer Frequenz größer 50 Hz getaktet, so dass der Pulsbetrieb durch das menschliche Auge nicht wahrnehmbar ist.

In einer weiteren bevorzugten Ausführungsform ist der zeitlich arithmetische Mittelwert der Stromstärke kleiner/gleich dem Grenzwert für den Dauerbetrieb der Stromstärke der LEDs. Aufgrund des proportionalen Zusammenhanges zwischen Lichtleistung und Stromstärke kann dadurch mit einer geringen Anzahl von LEDs die notwendige Lichtleistung erzeugt werden, ohne diese zu zerstören.

Weiter wird vorzugsweise die Pulsfrequenz und/oder die Pulsphase durch einen Zufallsgenerator generiert, so daß einerseits Fahrzeuge mit einer gleichen Vorrichtung sicher erkannt werden und gleichzeitig verhindert wird, daß die Reduzierung der Blendwirkung nicht verloren geht, beispielsweise weil das entgegenkommende Fahrzeug völlig synchron Licht emittiert.

In einer bevorzugten Ausführungsform ist das Lichtventil in die Frontscheibe des Kraftfahrzeuges integriert oder in einer klappbaren Blende angeordnet.

In einer weiteren bevorzugten Ausführungsform ist das Lichtventil als Shutterbrille ausgebildet.

In einer weiteren bevorzugten Ausführungsform ist die Shutterbrille zur drahtlosen Signalübertragung mit mindestens einem iR-Empfänger ausgebildet, so daß den Fahrer störende Leitungen entfallen. Die Verwendung einer Brille hat dabei gegenüber der Anordnung des Lichtventils in einer klappbaren Blende den Vorteil, daß die meisten Fahrer durch Sonnenbrillen ohnehin an das Tragen von Brillen beim Fahren gewöhnt sind, so daß die psychologische Umstellung entfällt.

In einer weiteren bevorzugten Ausführungform ist die Ansteuereinrichtung für das Lichtventil redundant ausgebildet, was die Ausfallsicherheit weiter erhöht.

Zur weiteren Erhöhung der Sicherheit ist das Lichtventil derart ausgebildet, dass dieses im Störungsfall permanent transparent geschaltet ist, wobei unter Störungsfall eine Unterbrechung der Signalwege oder ein Kurzschluss gegen Masse oder Versorgungsspannung verstanden wird.

In einer weiteren bevorzugten Ausführungsform sind jeweils mindestens zwei voneinander getrennte und schaltbare Teilarrays zur Erzeugung des Abblend- und des Fernlichts vorgesehen. Dadurch lassen sich sehr einfach unterschiedliche Beleuchtungsarten in einen Scheinwerfer integrieren. Selbstverständlich kann auch alternativ oder zusätzlich das Standlicht integriert werden.

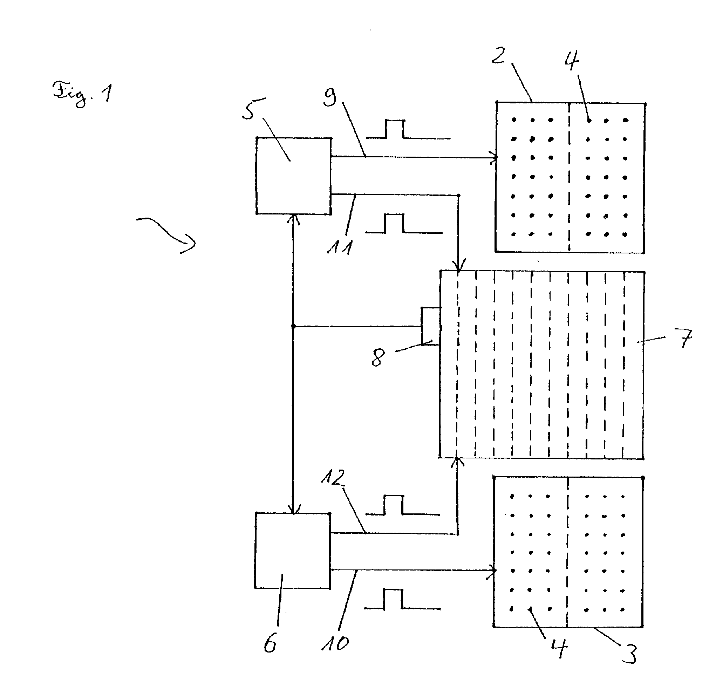

Die Erfindung wird nachfolgend anhand eines bevorzugten Ausführungsbeispieles näher erläutert. Die einzige Figur zeigt ein schematisches Blockschaltbild einer Vorrichtung zur Reduzierung von Blenderscheinungen eines Kraftfahrzeugführers.

Die Vorrichtung 1 umfasst zwei Arrays 2,3 mit lichtemittierenden Dioden LEDs 4, zwei Ansteuereinrichtungen 5,6 und ein als Flüssigkeitskristall ausgebildetes Lichtventil 7, das mindestens teilweise im Lichtbereich der Windschutzscheibe eines Kraftfahrzeuges angeordnet ist. Des weiteren umfaßt die Vorrichtung 1 eine Fotozelle 8, die außerhalb des Lichtventils 7 angeordnet ist. Die beiden Arrays 2,3 sind jeweils in voneinander unabhängige Teilarrays unterteilt, was schematisch durch die gestrichelte Linie angeordnet ist. Somit lassen sich jeweils durch Ansteuerung der einzelnen Teilarrays verschiedene Lichtquellen wie Fernlicht, Abblendlicht und Standlicht realisieren. Die Ansteuereinrichtung 5,6 steuern jeweils die LEDs 4 über eine Steuerleitung 9,10 pulsförmig an. Gleichzeitig steuern die Ansteuereinrichtungen 5,6 synchron zu den Ansteuersignalen der LEDs 4 das Lichtventil 7 über eine Steuerleitung 11, 12 an, so daß das Lichtventil 7 stets transparent ist, wenn die LEDs leuchten. In den Pulsauszeiten ist das Lichtventil 7 hingegen geschlossen bzw. nichttransparent. Aus Sicherheitsgründen ist das Lichtventil 7 spalten- und/oder zeitenförmig ausgebildet, so daß auch bei einem Defekt einer Zeile bzw. Spalte der Fahrer noch ausreichend Licht durch das Lichtventil erhält. Des weiteren ist das Lichtventil 7 mit Kurzschlußsicherungen ausgebildet, die bei einem Kurzschluß gegen Masse bzw. Betriebsspannung das Lichtventil 7 permanent transparent schalten. Die Pulsfrequenz für die LEDs 4 bzw. das Lichtventil 7 wird dabei größer als 50 Hz gewählt, so daß die Pulse weder vom Fahrer noch vom außenstehenden Dritten bemerkt werden. Das Verhältnis von Pulsein- zur Pulsauszeit wird dabei derart gewählt, daß das im Mittel durch das Lichtventil 7 kommende Licht erheblich reduziert wird. Wird nun beispielsweise das Verhältnis 1:10 gewählt, so gelangt nur 1/10 der äußeren Lichtstrahlung durch das Lichtventil. Entsprechend muß die Lichtleistung, die emittiert wird, um das 10 fache erhöht werden, damit die Umgebung in gleicher Helligkeit ausgeleutet wird. Um nun zu verhindern, daß bei einer ohnehin dunklen Umgebung bestimmte Objekte nicht mehr wahrgenommen werden, nimmt die Fotozelle 8 die Grundhelligkeit der Umgebung wahr und leitet diese an die Ansteuereinrichtungen 5,6 weiter. Diese Ansteuereinrichtungen 5,6 verändern dann in Abhängigkeit von der erfaßten Grundhelligkeit das Pulsein- zum Pulsauszeitverhältnis. Dabei gilt, daß je niedriger die Grundhelligkeit ist, desto länger kann die Pulseinzeit gewählt werden, ohne daß die Gefahr einer Blendung besteht. Entsprechend der Verlängerung der Pulseinzeit wird die Stromstärke der LEDs 4 reduziert, so daß andere Verkehrsteilnehmer nicht geblendet werden und gleichzeitig mehr Umgebungslicht wahrgenommen wird. Die Fotozelle 8 kann dabei im Zusammenspiel mit dem Lichtventil 7 auch als wirksame Sonnenblende verwendet werden.

## Patentansprüche

1. Vorrichtung zur Reduzierung von Blenderscheinungen eines Kraftfahrzeugführers, umfassend mindestens zwei gepulste Lichtquellen und mindestens ein mit den Lichtquellen synchronisiertes Lichtventil (7), wobei die Lichtquellen als LED-Array (2,3) mit lichtemittierenden Dioden LEDs (4) ausgebildet sind und das Lichtventil von einer Ansteuereinrichtung (5,6) angesteuert wird,
**dadurch gekennzeichnet, dass**
der Ansteuereinrichtung (5,6) für das Lichtventil (7) mindestens eine Fotozelle (8) zugeordnet ist und die Ansteuereinrichtung (5,6) das Tastverhältnis zwischen Pulseinzeit und Pulsauszeit in Abhängigkeit der Signale der Fotozelle (8) zu einer konstanten Grundhelligkeit für den Fahrer nachregelt, wobei entsprechend einer Verlängerung der Pulseinzeit die Stromstärke der LEDs (4) reduziert wird.

2. Vorrichtung nach Anspruch 1, **dadurch gekennzeichnet, dass** das Tastverhältnis und/oder die Grundhelligkeit manuell einstellbar ist.

3. Vorrichtung nach Anspruch 1 oder 2, **dadurch gekennzeichnet, dass** die LEDs (4) und das Lichtventil (7) mit einer Frequenz größer 50 Hz getaktet sind.

4. Vorrichtung nach einem der vorangegangenen Ansprüche, **dadurch gekennzeichnet, dass** die LEDs (4) im Überlastbereich betrieben werden, wobei der zeitlich arithmetische Mittelwert der Stromstärke kleiner/gleich dem Grenzwert für den Dauerbetrieb der Stromstärke der LEDs (4) entspricht.

5. Vorrichtung nach einem der vorangegangenen Ansprüche, **dadurch gekennzeichnet, dass** die Pulsfrequenz und/oder die Pulsphase durch einen Zufallsgenerator generiert sind.

6. Vorrichtung nach einem der vorangegangenen Ansprüche, **dadurch gekennzeichnet, dass** das Lichtventil (7) in die Frontscheibe des Kraftfahrzeuges integriert ist.

7. Vorrichtung nach einem der Ansprüche 1 bis 5, **dadurch gekennzeichnet, dass** das Lichtventil (7) in einer klappbaren Blende angeordnet ist.

8. Vorrichtung nach einem der Ansprüche 1 bis 5, **dadurch gekennzeichnet, dass** das Lichtventil (7) als Shutterbrille ausgebildet ist.

9. Vorrichtung nach Anspruch 8, **dadurch gekennzeichnet, dass** die Shutterbrille zur drahtlosen Signalübertragung mit mindestens einem IR-Empfänger ausgebildet ist.

10. Vorrichtung nach einem der vorangegangenen Ansprüche, **dadurch gekennzeichnet, dass** die Ansteuereinrichtung (5,6) für das Lichtventil (7) redundant ausgebildet ist.

11. Vorrichtung nach einem der vorangegangenen Ansprüche, **dadurch gekennzeichnet, dass** das Lichtventil (7) im Störungsfall permanent transparent geschaltet ist.

12. Vorrichtung nach einem der vorangegangenen Ansprüche, **dadurch gekennzeichnet, dass** jeweils voneinander getrennte und schaltbare Teilarrays zur Erzeugung des Abblend- und des Fernlichts vorgesehen sind.

## Claims

1. Device for reducing the dazzle experienced by a motor vehicle driver, the said device comprising at least two pulsed light sources and at least one light valve (7) that is synchronised with the light sources, wherein the light sources are in the form of LED arrays (2, 3) with light-emitting diodes LEDs (4) and the light valve (7) is activated by an activating device (5, 6), **characterised in that** at least one photoelectric cell (8) is associated with the activating device (5, 6) for the light valve (7) and the activating device (5, 6) readjusts the pulse ratio between pulse-in time and pulse-out time in dependence on the signals of the photoelectric cell (8) to form a constant background brightness for the driver, wherein the current intensity of the LEDs (4) is reduced corresponding to a lengthening of the pulse-in time.

2. Device according to claim 1, **characterised in that** the pulse ratio and/or the background brightness is manually adjustable.

3. Device according claim 1 or 2, **characterised in that** the LEDs (4) and the light valve (7) are clocked at a frequency greater than 50 Hz.

4. Device according to one of the preceding claims, **characterised in that** the LEDs (4) are operated within the overload range, wherein the timed arithmetic mean of the current intensity is smaller than/equal to the limit value for continuous operation of the current intensity of the LEDs (4).

5. Device according to one of the preceding claims, **characterised in that** the pulse frequency and/or the pulse phase are generated by a random generator.

6. Device according to one of the preceding claims, **characterised in that** the light valve (7) is integrated into the front windscreen of the motor vehicle.

7. Device according to one of claims 1 to 5, **characterised in that** the light valve (7) is disposed in a hinged screen.

8. Device according to one claims 1 to 5, **characterised in that** the light valve (7) is in the form of shutter glasses.

9. Device according to claim 8, **characterised in that** the shutter glasses are realised for wireless signal transmission with at least one IR receiver.

10. Device according to one of the preceding claims, **characterised in that** the activating device (5, 6) for the light valve (7) is redundant.

11. Device according to one of the preceding claims, **characterised in that** the light valve (7) is permanently transparent in the event of a fault.

12. Device according to one of the preceding claims, **characterised in that** switchable part arrays that are each separate from one another are provided for generating dipped beam light and main beam light.

## Revendications

1. Dispositif pour réduire les éblouissements d'un conducteur de véhicule automobile, comprenant au moins deux sources de lumière pulsées et au moins un obturateur de lumière (7) synchronisé aux sources de lumière, les sources de lumière étant réalisées comme un ensemble de DEL (2, 3) avec des diodes électroluminescentes DEL (4) et l'obturateur de lumière (7) étant commandé par un dispositif de commande (5, 6),
**caractérisé en ce que**
au dispositif de commande (5, 6) pour l'obturateur de lumière (7) est associée au moins une cellule photoélectrique (8) et le dispositif de commande (5, 6) réajuste le taux d'impulsions entre la durée d'impulsion entrante et la durée d'impulsion sortante en fonction des signaux de la cellule photoélectrique (8) pour une luminosité de base constante pour le conducteur, l'ampérage des DEL (4) étant réduit en fonction d'un prolongement de la durée d'impulsion entrante.

2. Dispositif selon la revendication 1, **caractérisé en ce que** le taux d'impulsions et/ ou la luminosité de base peut être réglée manuellement.

3. Dispositif selon la revendication 1 ou 2, **caractérisé en ce que** les DEL (4) et l'obturateur de lumière (7) sont cadencés à une fréquence supérieure à 50 Hz.

4. Dispositif selon l'une quelconque des revendications précédentes, **caractérisé en ce que** les DEL (4) fonctionnent dans la gamme de surcharge, la valeur moyenne arithmétique temporelle de l'ampérage correspondant de manière plus petite/identique à la valeur limite pour le fonctionnement continu de l'ampérage des DEL (4).

5. Dispositif selon l'une quelconque des revendications précédentes, **caractérisé en ce que** la fréquence d'impulsion et/ou la phase d'impulsion est générée par un générateur de nombres aléatoires.

6. Dispositif selon l'une quelconque des revendications précédentes, **caractérisé en ce que** l'obturateur de lumière (7) est intégré dans le pare-brise du véhicule automobile.

7. Dispositif selon l'une quelconque des revendications 1 à 5, **caractérisé en ce que** l'obturateur de lumière (7) est disposé dans un panneau rabattable.

8. Dispositif selon l'une quelconque des revendications 1 à 5, **caractérisé en ce que** l'obturateur de lumière (7) est réalisé comme des lunettes opaques.

9. Dispositif selon la revendication 8, **caractérisé en ce que** les lunettes opaques sont réalisées pour la transmission de signaux sans fil avec au moins un récepteur infrarouge.

10. Dispositif selon l'une quelconque des revendications précédentes, **caractérisé en ce que** le dispositif de commande (5, 6) pour l'obturateur de lumière (7) est réalisé de manière redondante.

11. Dispositif selon l'une quelconque des revendications précédentes, **caractérisé en ce que** l'obturateur de lumière (7) est commuté en mode transparent en permanence en cas de panne.

12. Dispositif selon l'une quelconque des revendications précédentes, **caractérisé en ce que** respectivement des ensembles partiels séparés les uns des autres et commutables sont prévus pour générer le feu de croisement et le feu de route.
